**Europäisches Patentamt**

**European Patent Office**

**Office européen des brevets**

(19)

(11) Veröffentlichungsnummer: **0 214 685**
**B1**

(12) # EUROPÄISCHE PATENTSCHRIFT

(45) Veröffentlichungstag der Patentschrift:
**08.03.89**

(51) Int. Cl.⁴: **F16J 1/02**, F16J 1/08, F02F 3/02

(21) Anmeldenummer: **86201460.2**

(22) Anmeldetag: **22.08.86**

(54) **Leichtmetallkolben.**

(30) Priorität: **06.09.85 DE 3531801**

(43) Veröffentlichungstag der Anmeldung:
**18.03.87 Patentblatt 87/12**

(45) Bekanntmachung des Hinweises auf die Patenterteilung:
**08.03.89 Patentblatt 89/10**

(84) Benannte Vertragsstaaten:
**DE FR GB IT**

(56) Entgegenhaltungen:
**DE-A- 2 046 978**
**DE-A- 3 446 121**
**FR-A- 1 537 455**

(73) Patentinhaber: **KOLBENSCHMIDT Aktiengesellschaft,
Karl-Schmidt-Strasse 8/12 Postfach 1351,
D-7107 Neckarsulm(DE)**

(72) Erfinder: **Essig, Gunder, Dr., Schöttlestrasse 42,
D-7100 Heilbronn(DE)**
Erfinder: **Bordt, Manfred, Eberstädter Strasse 46,
D-7106 Neuenstadt/Cleversulzbach(DE)**

(74) Vertreter: **Rieger, Harald, Dr., Reuterweg 14,
D-6000 Frankfurt am Main(DE)**

## Beschreibung

Die Erfindung betrifft einen Leichtmetallkolben für Brennkraftmaschinen mit ballig-ovaler Außenform, dessen tragende Schaftflächen jeweils in mehrere tragende Teilschaftflächen aufgeteilt sind.

Bei einem derartigen in der DE-A 3 437 111 beschriebenen Leichtmetallkolben sind die tragenden Schaftflächen durch eine in Umfangsrichtung des Kolbens verlaufende Einbuchtung jeweils in zwei – eine obere und eine untere – tragende Teilschaftflächen gegliedert. Die Tiefe der zwischen dem Einzug der Schleifkurve am oberen und unteren Schaftende verlaufenden Einbuchtung entspricht etwa dem doppelten Wert der Rauhtiefe des auf dem Schaft aufgebrachten Drehprofils. Die axiale Höhe der Einbuchtung nach unten und oben ist so bemessen, daß diese in der unteren Totlage nicht aus dem Zylinder austaucht und im Kaltzustand des Motors zwischen der oberen Grenze der Einbuchtung und der unteren Grenze des Einzugs der Schleifkurve am oberen Schaftende ein 1,5 bis 4,5 mm, vorzugsweise ein 1,5 bis 2,5 mm hoher Bereich der tragenden Teilschaftflächen achsparallel verläuft, und die Breite der tragenden Teilschaftflächen und der Einbuchtung wenigstens der Breite des Tragbildes entsprechen.

Durch eine derartige Gestaltung des Kolbenschaftes wird ein besseres Aufschwimmen auf dem Schmiermittelfilm erreicht, so daß sich die Reibungsverluste deutlich verringern und günstigere Gleitverhältnisse ergeben. Bedingt durch die vergleichsweise geringe Tiefe stellt die Einbuchtung ein ausgezeichnetes Schmiermittelreservoir dar, das zur Aufrechterhaltung der hydrodynamischen Schmierung in den tragenden Teilschaftflächen beiträgt. Ein besonderer Vorteil ist darin zu sehen, daß eine Zunahme der Flächenpressung mit steigender Belastung unterbleibt, weil die bei Teillast zur Anlage kommenden vergleichsweise schmalen Bereiche der tragenden Teilschaftflächen mit zunehmender Belastung immer breiter werden, d.h. sich jeweils über einen Umfang von bis zu 90° – bezogen auf eine Kolbenschafthälfte – erstrecken. Die notwendige Geradführung des Kolbens im Zylinder ist unter allen Betriebszuständen gewährleistet.

Es hat sich nun herausgestellt, daß die erforderliche Güte der Führung dieses Leichtmetallkolbens dann nicht sicher gewährleistet ist, wenn die Schleifkurve am kalten Kolben im Bereich des oberen Endes des Kolbenschafts bedingt durch die Kolbenkonstruktion und/oder infolge der dort hohen Temperaturen sowie zur Erzeugung guter Schmierverhältnisse stark eingezogen ist, so daß der Kolben in der Warmlaufphase des Motors im wesentlichen nur durch die untere Teilschaftfläche des Kolbenschafts geführt wird.

Aufgabe der vorliegenden Erfindung ist es deshalb, den Kolben der eingangs dargestellten Bauweise dahingehend abzuändern, daß bereits in der Warmlaufphase des Motors ein möglichst großer tragender Anteil des oberen Teils des Kolbenschafts in der Laufebene ohne Steigerung der Reibungsverluste und des Schmiermittelverbrauchs erzeugt wird.

Gelöst ist diese Aufgabe dadurch, daß erfindungsgemäß zwischen dem oberen und unteren Endbereich des mit eingezogener Schleifkurve versehenen Kolbenschafts mehrere, vorzugsweise 3 bis 5 in Umfangsrichtung des Kolbenschafts verlaufende Einbuchtungen angeordnet sind.

Der Abstand zwischen den Einbuchtungen kann regelmäßig oder unregelmäßig sein.

Durch die erfindungsgemäße Ausbildung des Kolbenschafts wird in vorteilhafter Weise erreicht, daß ein relativ großer Anteil der tragenden Teilschaftflächen des oberen Teils des Kolbenschafts bereits in der Warmlaufphase des Motors in der Laufebene geführt wird, ohne die günstigen Gleitverhältnisse zu beeinträchtigen.

Eine vorteilhafte Ausgestaltung der Erfindung ist darin zu sehen, daß die radiale Tiefe der Einbuchtungen jeweils dem 1,5 bis 2fachen Wert der Rauhtiefe des auf dem Kolbenschaft aufgebrachten Drehprofils entspricht.

Bei einer vorzugsweisen Rauhtiefe des Drehprofils von 5 bis 15 µm beträgt demnach die radiale Tiefe der Einbuchtungen 7,5 bis 30 µm. Der obere Grenzwert der Tiefe der Einbuchtung sollte nicht überschritten werden, da sich sonst eine zu große Schmiermittelmenge in den Einbuchtungen ansammelt und dadurch die Schmiermittelkontrolle beeinträchtigt ist. Der untere Grenzwert der Tiefe der Einbuchtungen gewährleistet, daß auch nach einem gewissen Verschleiß des Drehprofils die Funktion der Einbuchtung im Hinblick auf eine Unterbrechung des geschlossenen Schmiermittelfilms zwischen den tragenden Teilschaftflächen erhalten bleibt.

Die Einbuchtungen, die zweckmäßigerweise eine Höhe von 5 bis 8 mm besitzen, können zusammen 20 bis 50%, vorzugsweise ein Drittel der Kolbenschaftlänge einnehmen.

Zweckmäßigerweise sind die Übergänge der Einbuchtungen zu den jeweils nach beiden Seiten anschließenden tragenden Teilschaftflächen verrundet ausgebildet, so daß im Falle eines Verschleißes des Drehprofils nach längerer Laufzeit des Kolbens gewährleistet ist, daß sich keine nach oben gerichtete Kante ausbildet, die den Schmiermittelverbrauch nachteilig beeinflussen könnte.

Die Breite der tragenden Teilschaftflächen und der Einbuchtungen, die nicht wesentlich größer als die Breite des Tragbildes sind, sind durch sehnenartig gegenüber der Schaftoberfläche zurückgesetzte im Bereich der Kolbenbolzennaben beidseitig der horizontalen Kolbenbolzenebene verlaufende Freigüsse, Freischliffe oder Fräsungen begrenzt.

Es hat sich als besonders vorteilhaft herausgestellt, wenn die erfindungsgemäßen Maßnahmen auf einen Leichtmetallkolben angewendet werden, bei dem der äußere Abstand der gegenüber dem Schaftmantel zurückgesetzten Bolzennaben 60 bis 80%, vorzugsweise 65 bis 75% und die Breite der tragenden Teilschaftflächen sowie der Einbuchtungen 70 bis 90% des Kolbendurchmessers betragen.

Vorzugsweise eignet sich die Erfindung für Leichtmetall-Regelkolben ohne deutliche Trennung zwischen Kolbenkopf und Kolbenschaft, wie Ringstreifen und Segmentstreifenkolben sowie für Leichtmetall-Vollschaftkolben ohne Regelglied.

Auch ist die erfindungsgemäße Maßnahme für solche Kolben geeignet, die im Motorbetrieb am oberen Kolbenschaftende einen großen Rückfall besitzen.

Die Erfindung ist in der Zeichnung beispielhaft dargestellt und wird nachfolgend näher erläutert. Es zeigen:

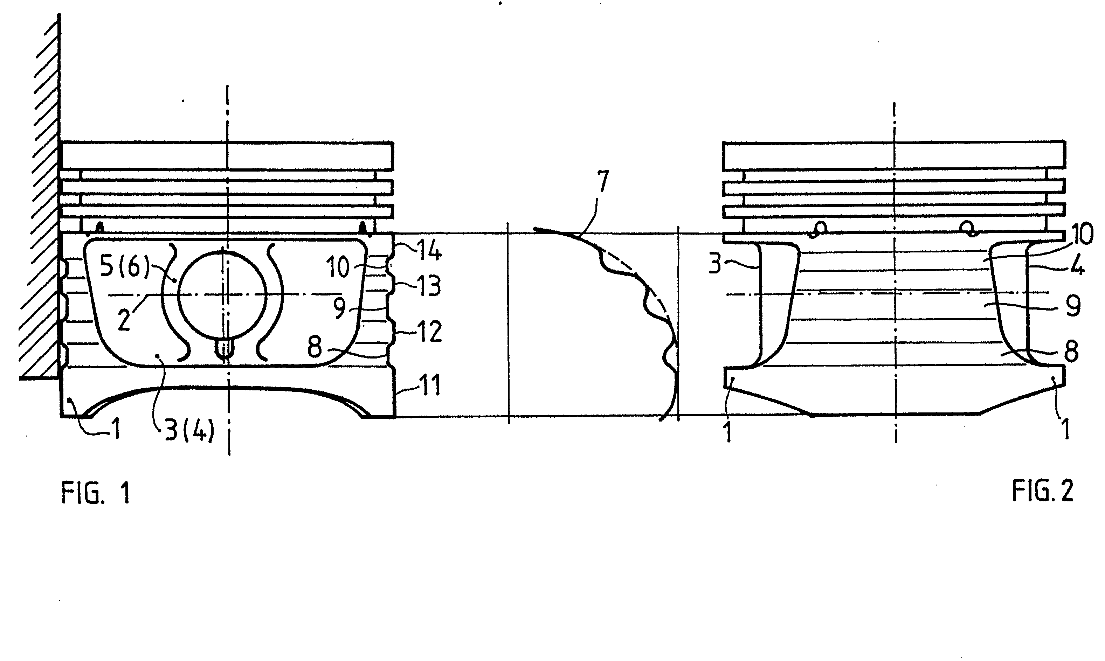

Fig. 1 eine Seitenansicht des Kolbens in Richtung der Bolzenachse mit zugehöriger Schleifkurve.

Fig. 2 eine Seitenansicht des Kolbens auf die Druck- bzw. Gegendruckseite.

Bei dem Kolben ist der Schaft 1 beidseitig der horizontalen Kolbenbolzenebene 2 sehnenartig gegenüber dem Schaftmantel zurückgesetzt, so daß sich die Aussparungen 3, 4 ergeben und die Bolzennaben 5, 6 weit zur Mitte verschoben sind. Der äußere Abstand der Bolzennaben 5, 6 beträgt lediglich 70% und der eingesetzte Kolbenbolzen besitzt eine Gesamtlänge von 65% des Kolbendurchmessers. Der Schaft 1 weist am unteren Ende eine runde Schaftform auf. Die ballig-ovale Außenform des Kolbens besitzt eine Schleifkurve 7, die am oberen Ende des Schaftes 1 stärker als am unteren Schaftende eingezogen ist und die drei in Umfangsrichtung verlaufende Einbuchtungen 8, 9, 10 besitzt, deren Tiefe 18 μm beträgt und deren Übergangsbereiche in die anschließenden tragenden Teilschaftflächen 11, 12, 13, 14, verrundet ausgebildet sind.

## Patentansprüche

1. Leichtmetallkolben für Brennkraftmaschinen mit ballig-ovaler Außenform, dessen tragende Schaftflächen jeweils in mehrere tragende Teilschaftflächen aufgeteilt sind, dadurch gekennzeichnet, daß zwischen dem oberen und unteren Endbereich des mit eingezogener Schleifkurve (7) versehenen Kolbenschafts (1) mehrere in Umfangsrichtung des Kolbenschafts verlaufende Einbuchtungen (8, 9, 10) angeordnet sind.

2. Leichtmetallkolben nach Anspruch 1, dadurch gekennzeichnet, daß die Einbuchtungen (8, 9, 10) in regelmäßigen oder unregelmäßigen Abständen angeordnet sind.

3. Leichtmetallkolben nach Anspruch 1, gekennzeichnet durch drei bis fünf in Umfangsrichtung des Kolbenschafts (1) verlaufende Einbuchtungen (8, 9, 10).

4. Leichtmetallkolben nach den Ansprüchen 1 und 2, dadurch gekennzeichnet, daß die radiale Tiefe der Einbuchtungen (8, 9, 10) jeweils dem 1,5 bis 2fachen Wert der Rauhtiefe des auf dem Kolbenschaft (1) aufgebrachten Drehprofils entspricht.

5. Leichtmetallkolben nach dem Anspruch 4, dadurch gekennzeichnet, daß die Rauhtiefe des Drehprofils 5 bis 15 μm beträgt.

6. Leichtmetallkolben nach den Ansprüchen 1 bis 5, dadurch gekennzeichnet, daß die Höhe der Einbuchtungen (8, 9, 10) 5 bis 8 mm beträgt.

7. Leichtmetallkolben nach den Ansprüchen 1 bis 6, dadurch gekennzeichnet, daß die Einbuchtungen (8, 9, 10) insgesamt 20 bis 50%, vorzugsweise ein Drittel, der Kolbenschaftlänge einnehmen.

8. Leichtmetallkolben nach den Ansprüchen 1 bis 7, dadurch gekennzeichnet, daß die Übergänge der Einbuchtungen (8, 9, 10) zu den jeweils nach beiden Seiten anschliessenden tragenden Teilschaftflächen (11, 12, 13, 14) verrundet ausgebildet sind.

9. Leichtmetallkolben nach den Ansprüchen 1 bis 8, dadurch gekennzeichnet, daß die Breite der tragenden Teilschaftflächen (11, 12, 13, 14) und der Einbuchtungen (8, 9, 10) nicht wesentlich größer als die Breite des jeweiligen Tragbildes sind.

## Claims

1. Light metal piston for internal combustion engines, with a convex, oval outer shape, the load-bearing skirt surfaces of which are each divided into several load-bearing partial skirt surfaces, characterised in that several indentations (8, 9, 10) running in the circumferential direction of the piston skirt are arranged between the upper and lower end regions of the piston skirt (1) which is provided with a recessed grinding curve (7).

2. Light metal piston according to Claim 1, characterised in that the indentations (8, 9, 10) are arranged at regular or irregular intervals.

3. Light metal piston according to Claim 1, characterised by three to five indentations (8, 9, 10) running in the circumferential direction of the piston skirt (1).

4. Light metal piston according to Claims 1 and 2, characterised in that the radial depth of the indentations (8, 9, 10) corresponds in each case to 1.5 to 2 times the value of the peak-to-valley height of the broken surface of the piston skirt (1).

5. Light metal piston according to Claim 4, characterised in that the peak-to-valley height of the broken surface is 5 to 15 μm.

6. Light metal piston according to Claims 1 to 5, characterised in that the height of the indentations (8, 9, 10) is 5 to 8 mm.

7. Light metal piston according to Claims 1 to 6, characterised in that the indentations (8, 9, 10) take up a total of 20 to 50%, preferably one third, of the length of the piston skirt.

8. Light metal piston according to Claims 1 to 7, characterised in that the transitions between the indentations (8, 9, 10) and the load-bearing partial skirt surfaces (11, 12, 13, 14) which adjoin on both sides in each case are formed rounded.

9. Light metal piston according to Claims 1 to 8, characterised in that the widths of the load-bearing partial skirt surfaces (11, 12, 13, 14) and the indentations (8, 9, 10) are not substantially greater than the width of the associated area in which a pressure mark will appear.

## Revendications

1. Piston en métal léger pour des moteurs à combustion interne comportant une forme extérieure ovale bombée, les surfaces portantes de la jupe du piston étant subdivisées respectivement en plusieurs surfaces portantes partielles, caractérisé par le fait que plusieurs renfoncements (8, 9, 10), qui s'étendent dans la direction circonférentielle de la jupe du piston (1), sont disposés entre la zone terminale supérieure et la zone terminale inférieure de la jupe de piston (1) comportant une courbe rectifiée rentrante (7).

2. Piston en métal léger suivant la revendication 1, caractérisé par le fait que les renfoncement (8, 9, 10) sont disposés à des distances régulières ou irrégulières.

3. Piston en métal léger suivant la revendication 1, caractérisé par trois à cinq renfoncements (8, 9, 10) s'étendant dans la direction circonférentielle de la jupe de piston (1).

4. Piston en métal léger suivant les revendications 1 et 2, caractérisé par le fait que la profondeur radiale des renfoncements (8, 9, 10) correspond respectivement à une valeur comprise entre 1,5 et 2 fois la valeur de la profondeur des rugosités du profil tourné présent sur la jupe de piston (1).

5. Piston en métal léger suivant la revendication 4, caractérisé par le fait que la profondeur des rugosités du profil tourné est comprise entre 5 et 15 µm.

6. Piston en métal léger suivant les revendications 1 à 5, caractérisé par le fait que la profondeur des renfoncements (8, 9, 10) est comprise entre 5 et 8 mm.

7. Piston en métal léger suivant les revendications 1 à 6, caractérisé par le fait que les renfoncements (8, 9, 10) occupent globalement 20 à 50% et de préférence un tiers de la longueur de la jupe de piston.

8. Piston en métal léger suivant les revendications 1 à 7, caractérisé par le fait que les jonctions des renfoncements (8, 9, 10) avec les surfaces partielles portantes (11, 12, 13, 14) de la jupe, qui s'y raccordent des deux côtés, sont arrondies.

9. Piston en métal léger suivant les revendications 1 à 8, caractérisé par le fait que la largeur des surfaces partielles portantes (11, 12, 13, 14) de la jupe et des renfoncements (8, 9, 10) n'est pas très supérieure à la largeur de la zone respective de portance.

FIG. 1

FIG. 2